# EUROPEAN PATENT APPLICATION

(11) **EP 3 496 232 A1**
(43) Date of publication of application: **12.06.2019**
(21) Application number: 17205494.2
(22) Date of filing: 05.12.2017
(51) Int. Cl.: H02K 1/02, H02K 1/27

(54) **PERMANENT MAGNET FOR A PERMANENT MAGNET MACHINE**

(71) Applicant: Siemens Gamesa Renewable Energy A/S, 7330 Brande (DK)
(72) Inventor: Azar, Ziad, Sheffield, S10 4ED (GB); Thougaard, Hans-Joergen, 8600 Silkeborg (DK); Urda, Adriana Cristina, 2300 København S (DK)
(74) Representative: Aspacher, Karl-Georg

(57) **Abstract**

The present invention describes a permanent magnet (100) for a permanent magnet machine (10) comprising:
- an outer surface (120) delimiting an inner volume (110) of the permanent magnet (100),
- at least one inner surface (201, 202, 203, 204, 205) connecting at least two portions (121, 122, 123, 124) of the outer surface (120),
- at least one first portion (120, 130, 140, 150, 160) of the inner volume (110) adjacent to the at least one inner surface (201, 202, 203, 204, 205) and at least a second portion (170) of the inner volume (110) distanced from the at least one inner surface (201, 202, 203, 204, 205). The at least one first portion (120, 130, 140, 150, 160) has a higher content of heavy rare elements than the at least second portion (170) .

## Description

### Field of invention

The present invention relates to the field of optimizing quantity and distribution of heavy rare earth (HRE) elements in permanent magnets in a permanent magnet machine. Particularly, the present invention relates to a permanent magnet for a permanent magnet machine and a method of manufacturing a permanent magnet for a permanent magnet machine.

Such permanent magnet and method of manufacturing a permanent magnet may be particularly used in the permanent magnet generator of a wind turbine.

### Art Background

In the technical field of permanent magnet machines it is known to provide magnets segmented in the axial or circumferential direction. According to the segmentation procedure magnets are usually cut from bigger sintered blocks into smaller parts, which are then coated and glued together.

The sintered blocks from which the magnets are derived normally include heavy rare earth (HRE) elements to provide resistance to demagnetization.

Heavy rare earth (HRE) elements are Yittrium (Y), Gadolinium (Gd), Terbium (Tb), Dysprosium (Dy), Holmium (Ho), Erbium (Er), Tullium (Tm), Ytterbium (Yb), and Lutetium (Lu). The content of HRE elements in the magnets is normally high, without being optimized for a non-uniform field distribution, although the magnets used in the permanent magnet machines are normally subject to a non-uniform magnetic field distribution.

### Summary of the Invention

It may be an objective of the present invention to provide a permanent magnet for a permanent magnet machine having a reduced content and at the same time an optimized distribution of the content of heavy rare earth (HRE) elements.

Further objectives may be reducing the manufacturing costs of the permanent magnets and reducing eddy current losses.

These objectives may be solved by the permanent magnet for a permanent magnet machine, the permanent magnet machine and the method of manufacturing the permanent magnet according to the independent claims.

According to a first aspect of the present invention a permanent magnet for a permanent magnet machine is described. The permanent magnet comprises:
- an outer surface delimiting an inner volume of the permanent magnet,
- at least one inner surface connecting at least two portions of the outer surface,
- at least one first portion of the inner volume adjacent to the at least one inner surface and at least a second portion of the inner volume distanced from the at least one inner surface,
wherein the at least one first portion has a higher content of heavy rare elements than the at least second portion.

According to a second aspect of the present invention a permanent magnet machine, including the above described permanent magnet, is provided.

The above described permanent magnet machine may be conveniently integrated in a wind turbine.

According to a third aspect of the present invention method of manufacturing the above described permanent magnet is provided.

The present invention achieves the above mentioned objectives by:
- reducing the HRE elements content in the permanent magnets, which leads to lower magnet and overall costs,
- optimizing the distribution of HRE elements along predefined inner surfaces of the permanent magnet, thus optimizing the magnetic properties of the permanent magnet to fit the magnetic field requirement.

Further advantages are that:
- a lower HRE elements may be likely associated with high magnetic flux and therefore higher generator performance and efficiency,
- the segmentation of the magnets contributes in reducing the eddy current losses.

According to exemplary embodiments of the present invention, the permanent magnet comprises at least two segments joined together,
wherein the at least one inner surface is provided at the interface between the at least two segments.

The at least two segments may be for example joined together by gluing.

The at least two segments of the permanent magnet may be formed from a sintered material.

According to a possible embodiment of the present invention, a block of sintered material is preliminary formed, from which the permanent magnet segments are subsequently formed by cutting.

According to embodiments of the present invention, the at least one first portion having a higher content of heavy rare elements may be formed by applying a heavy rare elements diffusion process.

Particularly, the heavy rare elements diffusion process may be performed on two opposite surfaces of the permanent magnet segment.

According to embodiments of the present invention, after the heavy rare elements diffusion process has been applied, the segments are joined together, for example by gluing, in such a way that the at least one first portion having a higher content of heavy rare elements is provided at the interface between the at least two segments.

Advantageously, by choosing the shape and mutual orientation of the segment, the positioning inside the permanent magnet of the portions having a higher content of heavy rare elements can be efficiently controlled.

Also the number of segments may be chosen in order to achieve the desired distribution of the portions having a higher content of heavy rare elements.

According to a possible embodiment of the present invention, the at least one inner surface is provided on the permanent magnet in order to be orthogonal to a rotational axis of the permanent magnet machine.

According to another possible embodiment of the present invention, the at least one inner surface is provided on the permanent magnet in order to be radially oriented with respect to a rotational axis of the permanent magnet machine.

According to a further possible embodiment of the present invention, the at least one inner surface is provided on the permanent magnet in order to be circumferentially oriented with respect to a rotational axis of the permanent magnet machine.

According to exemplary embodiments of the present invention, the permanent magnet is partially segmented, i.e. the permanent magnet comprises at least one slit, wherein the at least one inner surface is provided along the slit.

According to such embodiments the advantages of the present invention may be achieved without needing to form and then joining permanent magnet segments.

To form the permanent magnet of the latter embodiment, a solid permanent magnet of sintered material is preliminary formed. Subsequently, at least a slit is cut on the permanent magnet extending from the outer surface of the permanent magnet to a slit border inside the inner volume of the permanent magnet. Further subsequently an heavy rare elements diffusion process is applied to the permanent magnet including the slit(s) to form the at least one first portion having a higher content of heavy rare elements adjacent to the inner surfaces of the at least one slit.

According to a possible embodiment of the present invention, the slit extends from the outer surface of the permanent magnet to a slit border inside the inner volume of the permanent magnet. The slit border may be inclined with respect to the outer surface of the permanent magnet.

The slit may have a width of 1 to 2 mm. The width may be also smaller than 1 mm, i.e. 0,2 mm, if for example the slits are done with a wire cutter.

Similarly to the embodiments where the permanent magnet is totally segmented, the slit may be, with respect to the rotational axis of the permanent magnet machine, axially, radially or circumferentially oriented. Alternatively, the slit may have any other orientation.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Figure 1 shows a schematic section of a wind turbine including a permanent magnet machine according to the present invention.
Figure 2 shows a partial cross section of the permanent magnet machine of figure 1, where a plurality of permanent magnets according to the present invention is shown.
Figure 3 shows a circumferential view of a first embodiment of a permanent magnet according to the present invention.
Figure 4 shows a cross-sectional view of the permanent magnet of figure 3 taken along the sectional line IV-IV in figure 3.
Figure 5 shows a circumferential view of a second embodiment of a permanent magnet according to the present invention.
Figure 6 shows a circumferential view of a third embodiment of a permanent magnet according to the present invention.
Figure 7 shows a circumferential view of a fourth embodiment of a permanent magnet according to the present invention.
Figure 8 shows a top view of a fifth embodiment of a permanent magnet according to the present invention.
Figure 9 shows a circumferential section of the permanent magnet of figure 8 taken along the sectional line IX-IX in figure 8.

### Detailed Description

The illustrations in the drawings are schematic. It is noted that in different figures, similar or identical elements are provided with the same reference signs.

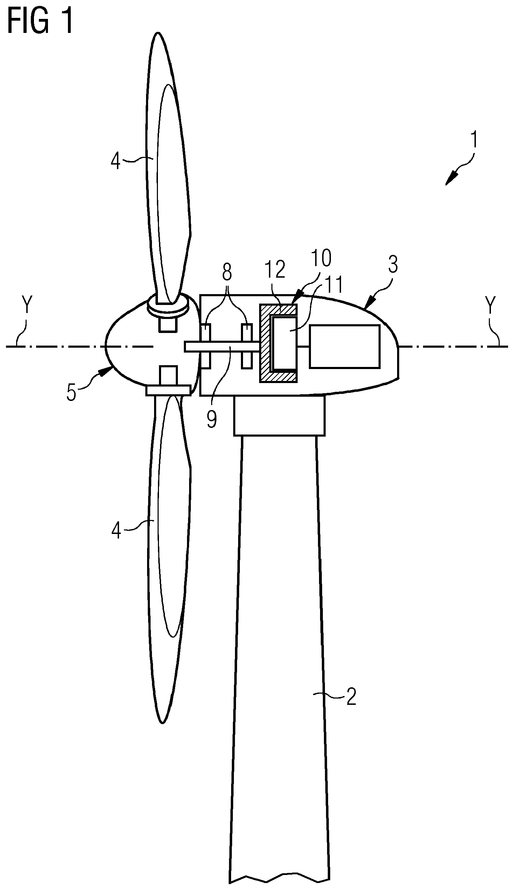

**Figure 1** shows a wind turbine 1 according to the invention. The wind turbine 1 comprises a tower 2, which is mounted on a non-depicted fundament. A nacelle 3 is arranged on top of the tower 2.

The wind turbine 1 further comprises a wind rotor 5 having three blades 4 (in the perspective of Figure 1 only two blades 4 are visible). The wind rotor 5 is rotatable around a rotational axis Y. When not differently specified, the terms axial, radial and circumferential in the following are made with reference to the rotational axis Y.

The blades 4 extend radially with respect to the rotational axis Y.

The wind turbine 1 comprises a permanent magnet electric generator 10.

According to other possible embodiments of the present invention (not represented in the attached figures), the present invention may be applied to any other type of permanent magnet machine.

The wind rotor 5 is rotationally coupled with the permanent magnet generator 10 either directly, e.g. direct drive (not shown in Figure 1), or by means of a rotatable main shaft 9. A schematically depicted bearing assembly 8 is provided in order to hold in place the rotor 5. The rotatable main shaft 9 extends along the rotational axis Y. The permanent magnet electric generator 10 includes a stator 11 and a rotor 12. The rotor 12 is rotatable with respect to the stator 11 about the rotational axis Y.

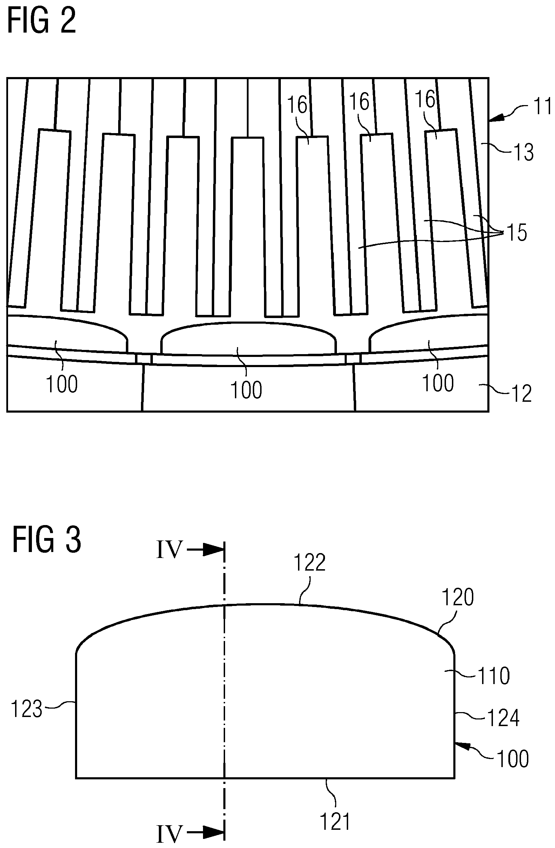

**Figure 2** shows a partial cross-sectional view of the stator 11 and the rotor 12 of the permanent magnet electric generator 10.

The stator 11 includes a stator body 13 having a plurality of radial stator teeth 15 and a plurality of intermediate slots 16, each slot 16 circumferentially extending between two respective teeth 15.

The rotor 12 is radially external with respect the stator 11 and rotatable about the rotational axis Y. A plurality of permanent magnets 100 according to the present invention are attached to a side of the rotor 12 which faces the stator 11.

**Figure 3** shows a circumferential view of a first embodiment of the permanent magnet 100.

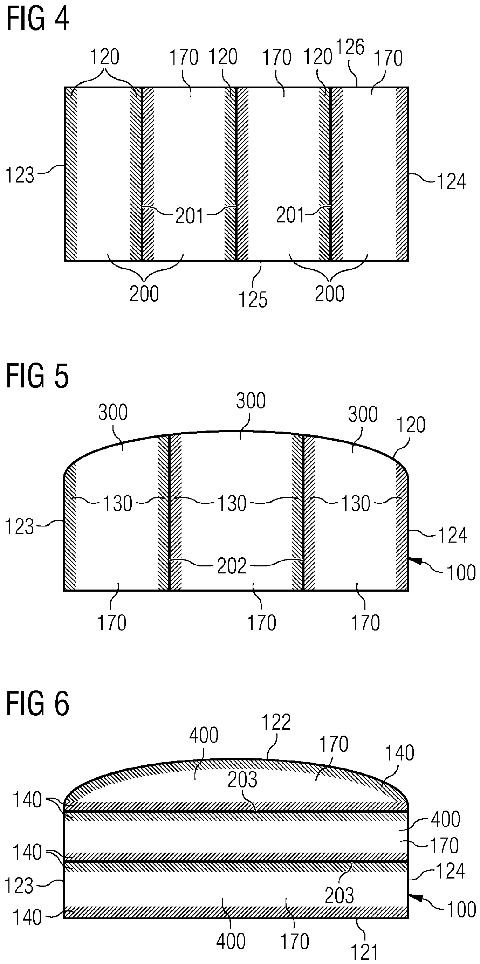

**Figure 4** shows an axial cross-sectional view of first embodiment of the permanent magnet 100.

The permanent magnet 100 comprises an outer surface 120 delimiting an inner volume 110 of the permanent magnet 100.

The outer surface 120 includes a plurality of portions or faces, including a bottom face 121 and a top face 122, connected by four lateral faces 123, 124, 125, 126.

The permanent magnet 100 comprises a plurality of inner surfaces 201 (three inner surfaces 201 are shown in figure 4) connecting portions, i.e. the lateral faces 125, 126, of the outer surface 120. The inner surfaces 201 are orthogonal to the lateral faces 125, 126.

Inside the inner volume 110, a plurality of portions 120 are provided, having a higher content of heavy rare elements than other portions 170 of the inner volume 110. According to the present invention, the plurality of portions 120 having a higher content of heavy rare elements are respectively provided adjacent to the plurality of inner surfaces 201, while the other portions 170 of the inner volume 110 are distanced from the plurality of inner surfaces 201.

In the first embodiment of Figures 3 and 4 the plurality of inner surfaces 201 are oriented in such a way to be orthogonal to the rotational axis Y of the permanent magnet electric generator 10. Portions 120 having a higher content of heavy rare elements are also provide adjacent to the two lateral faces 125, 126 of the outer surface 120, which are in operation orthogonal to the rotational axis Y.

The permanent magnet 100 of this first embodiment comprises a plurality of segments 200 (four segments 200 are shown in the embodiment of Figures 3 and 4) joined together for example by gluing along the axial direction.

Before joining them, a heavy rare elements diffusion process to the segments 200 in order to form the plurality of portions 120 having a higher content of heavy rare elements, adjacent to the inner surfaces 201 and lateral faces 123, 124.

More in details, the method of manufacturing the permanent magnet 100 includes the steps of:
- forming a block of sintered magnetic material (not shown in the attached figure),
- forming the magnetic segments 200 by cutting from block of sintered magnetic material,
- applying an heavy rare elements diffusion process to form the portions 120 having a higher content of heavy rare elements adjacent to two opposite surfaces of each magnetic segments 200, which will correspond in the assembled permanent magnet 100 to the inner surfaces 201 and lateral faces 123, 124. The portions 120 are structured as layers having a thickness corresponding to the penetration depth heavy rare elements diffusion process, i.e. 20-30 mm,
- joining together the segments 200 along the axial direction Y, in such a way that portions 120 having a higher content of heavy rare elements are provided at the interface between the segments 200.

**Figure 5** shows a circumferential view of a second embodiment of the permanent magnet 100.

The permanent magnet 100 comprises a plurality of inner surfaces 202 (two inner surfaces 202 are shown in figure 5) connecting portions, i.e. a bottom face 121 and a top face 122, of the outer surface 120. The inner surfaces 202 are orthogonal to the bottom face 121. A plurality of portions 130 are provided, having a higher content of heavy rare elements than other portions 170 of the inner volume 110. The plurality of portions 120 having a higher content of heavy rare elements are respectively provided adjacent to the plurality of inner surfaces 202, while the other portions 170 of the inner volume 110 are distanced from the plurality of inner surfaces 202.

In the second embodiment of Figure 5 the plurality of inner surfaces 202 are radially oriented with respect to the rotational axis Y of the permanent magnet electric generator 10. Portions 130 having a higher content of heavy rare elements are also provide adjacent to the two lateral faces 123, 124 of the outer surface 120, which are orthogonal to the bottom face 121.

The permanent magnet 100 of this second embodiment comprises a plurality of segments 300 (three segments 300 are shown in the embodiment of Figure 5) joined together for example by gluing along the circumferential direction. The method of manufacturing the permanent magnet 100 of this second embodiment is analogous to the method of manufacturing described above with reference to the first embodiment.

Figure 6 shows a circumferential view of a third embodiment of the permanent magnet 100.

The permanent magnet 100 comprises a plurality of inner surfaces 203 (two inner surfaces 203 are shown in figure 6) connecting portions, i.e. the lateral faces 123, 124, of the outer surface 120. The inner surfaces 203 are orthogonal to the lateral faces 123, 124. A plurality of portions 140 are provided, having a higher content of heavy rare elements than other portions 170 of the inner volume 110. The plurality of portions 140 having a higher content of heavy rare elements are respectively provided adjacent to the plurality of inner surfaces 203, while the other portions 170 of the inner volume 110 are distanced from the plurality of inner surfaces 203.

In the third embodiment of Figure 6 the plurality of inner surfaces 203 are circumferentially oriented with respect to the rotational axis Y of the permanent magnet electric generator 10. Portions 140 having a higher content of heavy rare elements are also provide adjacent to the bottom face 121 and the top face 122.

The permanent magnet 100 of this third embodiment comprises a plurality of segments 400 (three segments 400 are shown in the embodiment of Figure 6) joined together by gluing along the radial direction. The method of manufacturing the permanent magnet 100 of this third embodiment is analogous to the method of manufacturing described above with reference to the first embodiment.

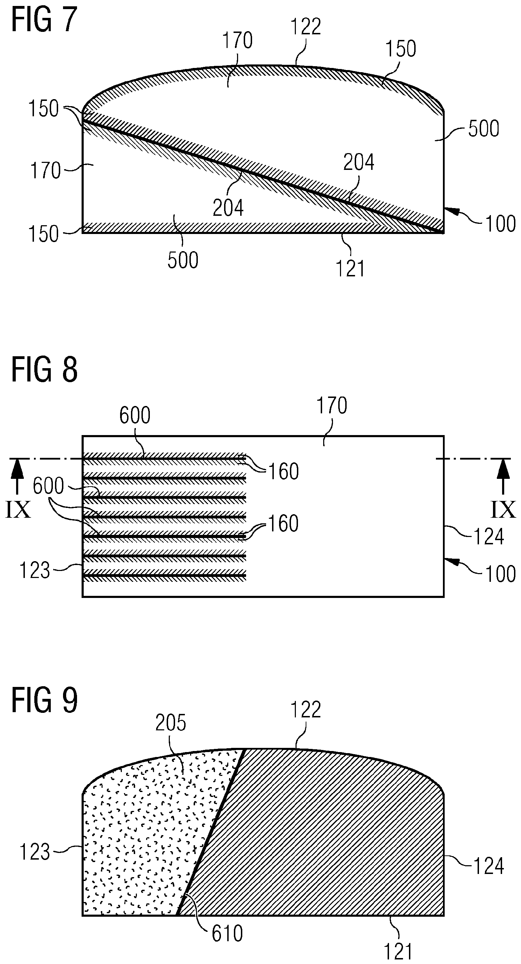

**Figure 7** shows a circumferential view of a fourth embodiment of the permanent magnet 100.

The permanent magnet 100 comprises one inner surface 204 connecting obliquely a border of the bottom face 121 with a border of the top face 122. Two portions 150 are provided, having a higher content of heavy rare elements than other portions 170 of the inner volume 110, adjacent to the bottom face 121 and the top face 122. Portions 150 having a higher content of heavy rare elements are also provide adjacent to the bottom face 121 and the top face 122.

The permanent magnet 100 of this fourth embodiment comprises two segments 500 joined together for example by gluing along the radial direction. The method of manufacturing the permanent magnet 100 of this fourth embodiment is analogous to the method of manufacturing described above with reference to the first embodiment.

According to other embodiments of the present invention (not shown) other permanent magnets similar to the embodiments of figures 3 to 7 may be obtained. The number and orientation of the segments may be conveniently chosen for each embodiment, so that a desired distribution of the portions having a higher content of heavy rare elements is achieved.

**Figures 8** and **9** show respectively a top view and a circumferential sectional view of a fifth embodiment of the permanent magnet 100, including a plurality of slits 600 (seven slits 600) provided between the bottom face 121, the top face 122 and a lateral face 123 and orthogonal thereto. Each slit 600 extends radially between the bottom face 121 and the top face 122 and circumferentially between lateral face 123 and a slit border 610 inside the inner volume 110 of the permanent magnet 100. The slit border 610 connects the bottom face 121 and the top face 122 and is inclined with respect to both the bottom face 121 and the top face 122.

According to other embodiments of the present invention (not shown) the slits 600 may be provided in any number (one or more) and with any orientation. In particular, the slits 600 may be parallel or inclined with respect to each other.

Each slit 600 includes two opposite main surfaces 205, adjacent to which a respective portion 150 of the inner volume 110 is provided, having a higher content of heavy rare elements than other portions 170 of the inner volume 110, which are remote from the surfaces 205.

A method of manufacturing of this fifth embodiment of the permanent magnet 100 includes the steps of:
- forming a permanent magnet 100 of sintered material,
- cutting one or more slits 600 on the permanent magnet 100 extending from the outer surface 120 of the permanent magnet 100 to a slit border 610 inside the inner volume 110 of the permanent magnet 100,
- applying a heavy rare elements diffusion process to form the two portions 160 having a higher content of heavy rare elements adjacent to the two opposite main surfaces 205 of each slit 600.

## Claims

1. Permanent magnet (100) for a permanent magnet machine (10) comprising:
- an outer surface (120) delimiting an inner volume (110) of the permanent magnet (100),
- at least one inner surface (201, 202, 203, 204, 205) connecting at least two portions (121, 122, 123, 124, 125, 126) of the outer surface (120),
- at least one first portion (120, 130, 140, 150, 160) of the inner volume (110) adjacent to the at least one inner surface (201, 202, 203, 204, 205) and at least a second portion (170) of the inner volume (110) distanced from the at least one inner surface (201, 202, 203, 204, 205),
wherein the at least one first portion (120, 130, 140, 150, 160) has a higher content of heavy rare elements than the at least second portion (170).

2. Permanent magnet (100) according to claim 1, comprising at least two segments (200, 300, 400, 500) joined together, wherein the at least one inner surface (201, 202, 203, 204) is provided at the interface between the at least two segments (200, 300, 400, 500).

3. Permanent magnet (100) according to claim 1 or 2, wherein the at least one inner surface (201, 202, 203, 204, 205) is provided on the permanent magnet in order to be orthogonal to a rotational axis (Y) of the permanent magnet machine (10).

4. Permanent magnet (100) according to claim 1 or 2, wherein the at least one inner surface (201, 202, 203, 204, 205) is provided on the permanent magnet in order to be radially oriented with respect to a rotational axis (Y) of the permanent magnet machine (10).

5. Permanent magnet (100) according to claim 1 or 2,
wherein the at least one inner surface (201, 202, 203, 204, 205) is provided on the permanent magnet in order to be circumferentially oriented with respect to a rotational axis (Y) of the permanent magnet machine (10).

6. Permanent magnet (100) according to claim 1, comprising at least one slit (600),
wherein the at least one inner surface (205) is provided along the slit (600).

7. Permanent magnet (100) according to claim 6,
wherein the slit (600) extends from the outer surface (120) of the permanent magnet (100) to a slit border (610) inside the inner volume (110) of the permanent magnet (100).

8. Permanent magnet (100) according to claim 7,
wherein slit border (610) inside the inner volume (110) of the permanent magnet (100) is inclined with respect to the outer surface (120) of the permanent magnet (100).

9. Permanent magnet (100) according to any of the claims 6 to 8, comprising a plurality of slits (600) extending from at least one portion (121, 122, 123, 124, 125, 126) of the outer surface (120).

10. Permanent magnet (100) according to claim 9, wherein the plurality of slits (600) are parallel or inclined with respect to each other.

11. Permanent magnet machine (10), comprising a permanent magnet (100) according to any one of the claims 1 to 10.

12. Method of manufacturing a permanent magnet (100) for an permanent magnet machine (10), comprising forming an permanent magnet (100) having:
- an outer surface (120) delimiting an inner volume (110) of the permanent magnet (100),
- at least one inner surface (201, 202, 203, 204, 205) connecting at least two portions (121, 122, 123, 124, 125, 126) of the outer surface (120),
- at least one first portion (120, 130, 140, 150, 160) of the inner volume (110) adjacent to the at least one inner surface (201, 202, 203, 204, 205) and at least a second portion (170) of the inner volume (110) distanced from the at least one inner surface (201, 202, 203, 204, 205),
wherein the at least one first portion (120, 130, 140, 150, 160) has a higher content of heavy rare elements than the at least second portion (170).

13. Method of manufacturing according to claim 12, wherein the method includes the steps of:
- forming at least two segments (200, 300, 400, 500) of the permanent magnet (100),
- applying an heavy rare elements diffusion process to form the at least one first portion (120, 130, 140, 150, 160) having a higher content of heavy rare elements adjacent to at least one surface (201, 202, 203, 204) of the two segments (200, 300, 400, 500),
- joining together the at least two segments (200, 300, 400, 500) in such a way that the at least one first portion (120, 130, 140, 150, 160) having a higher content of heavy rare elements is provided at the interface between the at least two segments (200, 300, 400, 500).

14. Method of manufacturing according to claim 13, wherein the at least two segments (200, 300, 400, 500) are formed from a sintered material.

15. Method of manufacturing according to claim 14, wherein the at least two segments (200, 300, 400, 500) are formed by cutting a block of sintered material.

16. Method of manufacturing according to any of the claims 12 to 15, wherein heavy rare elements diffusion process is applied on two opposite surfaces (201, 202, 203, 204) of the two segments (200, 300, 400, 500).

17. Method of manufacturing according to claim 12, wherein the method includes the steps of:
- forming a permanent magnet (100) of sintered material,
- cutting at least a slit (600) on the permanent magnet (100) extending from the outer surface (120) of the permanent magnet (100) to a slit border (610) inside the inner volume (110) of the permanent magnet (100),
- applying an heavy rare elements diffusion process to form the at least one first portion (160) having a higher content of heavy rare elements adjacent to the at least one slit (600).
